# EUROPEAN PATENT SPECIFICATION

(11) **EP 1 859 996 B1**
(45) Date of publication and mention of the grant of the patent: **07.04.2010**
(21) Application number: 07108716.7
(22) Date of filing: 23.05.2007
(51) Int. Cl.: B60R 3/02, A61G 3/06, B61D 23/02, B60P 1/43

(54) **Transport vehicle equipped with access device for persons with reduced mobility**
Transportfahrzeug mit Zugangsvorrichtung für Personen mit eingeschränkter Mobilität
Véhicule de transport équipé d'un dispositif d'accès pour les personnes à mobilité réduite

(30) Priority: 23.05.2006 FR 0604604
(43) Date of publication of application: 28.11.2007
(73) Proprietor: Iveco France S.A., 69200 Vénissieux (FR)
(72) Inventor: Rey, Philippe, 69320 Feyzin (FR)
(74) Representative: Borsano, Corrado

(56) References cited:
- WO-A-00/12039
- WO-A-2005/030551
- WO-A-2005/123450
- DE-A1- 3 708 498
- DE-U1- 8 910 746
- DE-U1- 29 820 881
- FR-A- 2 637 245

## Description

The present invention concerns a transport vehicle having devices of access for persons with reduced mobility.

The invention is aimed at all types of transport vehicle whose route involves at least one station stop, during which people are likely to board the vehicle, and also to alight from it. It is aimed at such a vehicle, which may or may not be driven in a dedicated lane, in particular by means of electric wires, of rails or even by optical means.

This type of transport vehicle typically includes a chassis mounted on at least one axle having bearing members, which are usually wheels with tyres. In these conditions, transport vehicles in the sense of the invention include in particular, but not exclusively, buses and also trolleybuses.

More specifically, this invention aims to improve the use of such a vehicle by persons with reduced mobility. The latter are notably persons who move around with the aid of a wheelchair. In a known manner, such persons with reduced mobility can access the vehicle by means of an access device which is mobile with respect to a platform fixed to the chassis of the vehicle.

Said access device generally includes a ramp, lodged in its retracted position in a casing. The latter is arranged below the side edge of the fixed platform, said edge being adjacent to the vehicle's door. Said ramp may be opened out, when the vehicle is stopped, so that it comes to bear against the external platform next to the vehicle.

Such an access device is disclosed, for example, in German Utility model (Gebrauchsmuster) DE 8910746 U1, which represents the closest prior art for the present invention in that the features of the preamble of claim 1 are disclosed therein.

This known solution has certain disadvantages, however.

Indeed, first of all it is not sufficiently reliable. In other words, when a stop is made, the operation consisting of opening out the aforesaid ramp can sometimes be critical, or even impossible to achieve.

Furthermore, said retractable ramp does not permit adaptation to different shapes of external platform, particularly when said external platforms have different heights. Thus, when the external platform is relatively high, the ramp moves out in the direction of a middle area of the external platform, which is situated well below the upper surface of the external platform. In these conditions, said opened ramp does not guarantee the desired function, in that it is not suitable to ensure that persons with reduced mobility can access the interior of the vehicle.

Finally, the operations to open out said ramp require significant monitoring on the part of the driver. This is therefore a disadvantage, particularly in that this manoeuvre causes a significant waste of time to the transport schedule.

This having been specified, the invention aims to find a solution for the various disadvantages of the prior art as described above.

To this end, it has as its object a transport vehicle, particularly a bus or a tram, including a chassis mounted on at least one axle joined to bearing members, such as wheels, the chassis having a fixed platform and at least one access device, mobile with respect to the fixed platform, the or each access device being movable between a retracted position and an open position, in which it allows persons with reduced mobility to access the fixed platform from a external platform, in particular persons who move around with the aid of a wheelchair, characterised in that said mobile access device is a mobile platform, allowing passengers to alight or descend in its retracted position, the or each mobile platform comprising a retractable nose, said retractable nose being able to be moved with respect to the mobile platform between a retracted position and an open position, in which it is able to come to bear against the external platform.

According to other characteristics of the invention:
- the or each mobile platform is mounted so that it pivots with respect to the fixed platform;
- the or each mobile platform is mounted so that it pivots with respect to the fixed platform around a pivoting axis, forming a main longitudinal axis of the vehicle;
- there are means for detecting the presence of the external platform, joined to the mobile platform;
- the means of detection comprise a sensor, in particular of an optical, ultrasound or inductive type;
- the retractable nose is placed alongside the lower surface of the mobile platform and, in its opened position, said nose is hinged with respect to the mobile platform around a hinge axis, which is specifically parallel to a principal longitudinal axis of the vehicle;
- there is a displacement cylinder for the nose hinged with respect to the mobile platform, and the nose is hinged with respect to the cylinder rod around another hinge axis, which is specifically parallel to a principal longitudinal axis of the vehicle.

The invention will be better understood and other advantages of said invention will become clearer in the light of the following description of a method of embodying a transport vehicle according to its principle, given purely by way of example and with reference to the annexed drawings, in which:
- figure 1 is a side view, illustrating a transport vehicle according to the invention;
- figures 2A to 2C are rear views, illustrating an access device for persons with reduced mobility, which the vehicle in figure 1 is equipped with, in three different positions of its operation; and
- figures 3A to 3C are rear views, similar to figures 2A to 2C, illustrating a further embodiment of the access device for persons with reduced mobility, in three phases of its operation.

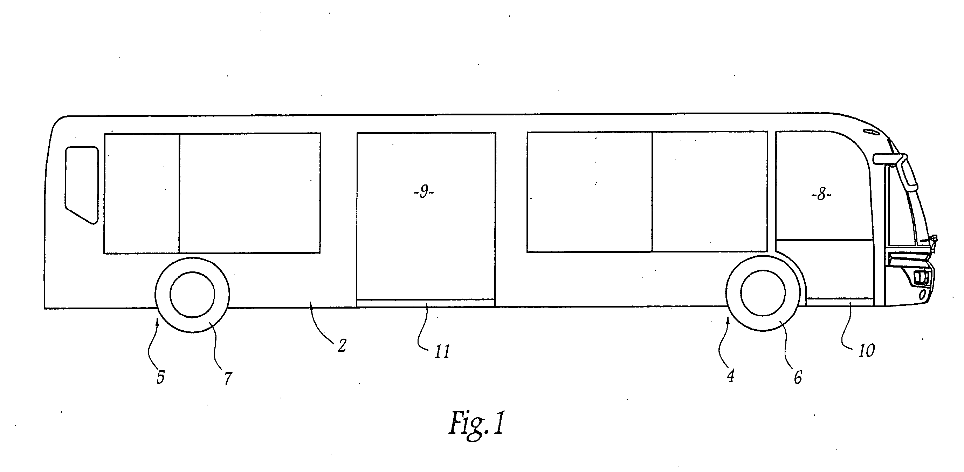

The transport vehicle illustrated in figure 1, which is a bus or a tram, includes in a known manner a chassis 2, which is mounted on a front axle 4, as well as a rear axle 5. These two axles 4 and 5 are equipped with bearing members which are wheels on rubber tyres, numbered 6 and 7 respectively. Typically, it also has a front door 8, as well as a rear door 9.

Two access devices 10 and 11, corresponding to this invention are included on the side of the vehicle, immediately below each door 8 and 9. Said access devices, which may be opened laterally, in other words perpendicularly to the surface of the page, shall be described in more detail below. Thus, in figure 1, they are shown schematically.

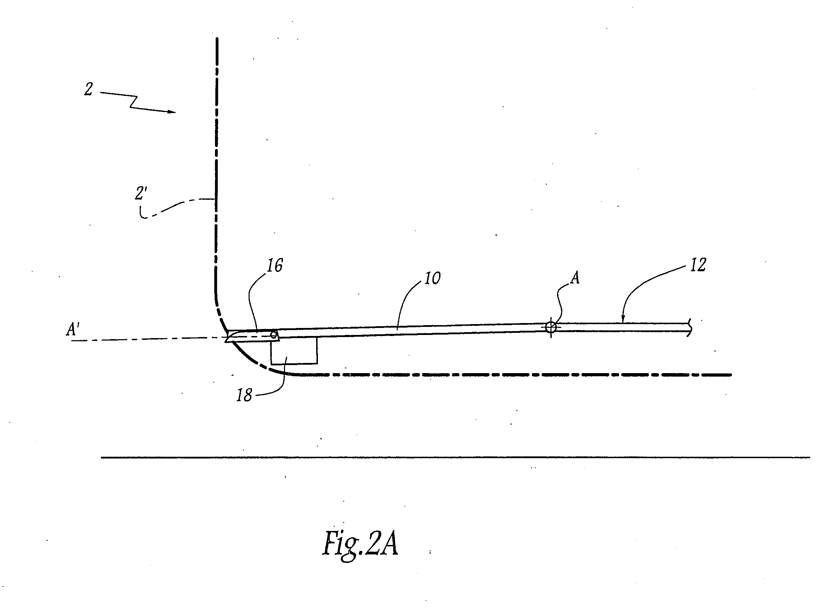

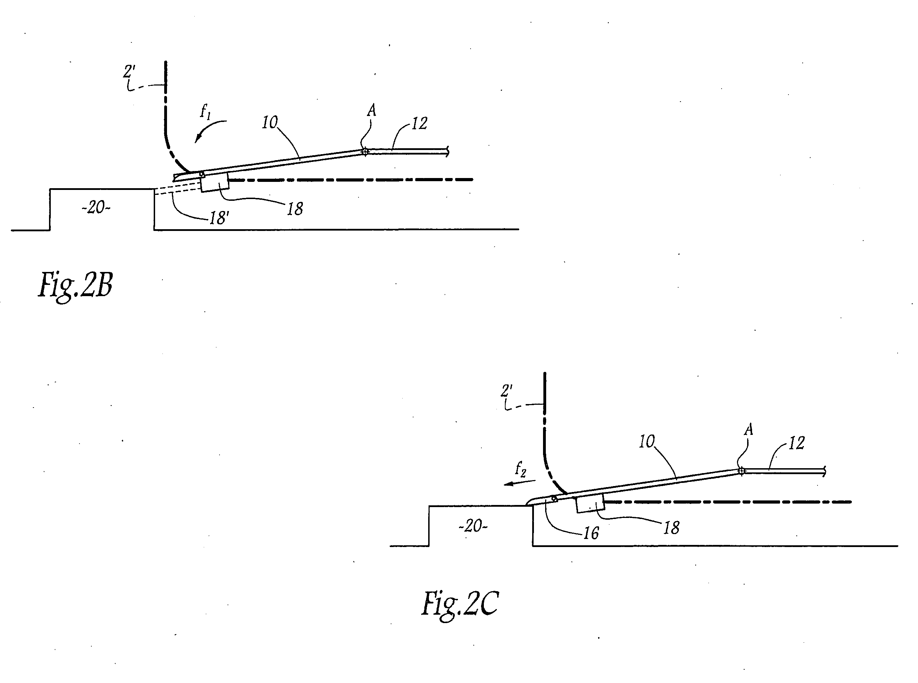

Figures 2 to 5 illustrate, on a larger scale and from two different angles to that in figure 1, the access device 10 which is connected to the forward door 8. However, the other access device 11 is in every way similar to that numbered 10 which shall now be described.

Figures 2 to 5 show the chassis 2, illustrated in dashed font, the side edge of which has been numbered 2', as well as a fixed platform 12, extending approximately in parallel to the road, in other words usually in a horizontal direction. The access device 10, mentioned above, is formed by a mobile platform extending between a position alongside the side edge of the chassis 2 and the edge with respect to the fixed platform 12. Said mobile platform 10 is hinged, by any suitable means, such as a hinge which is shown schematically, with respect to the fixed platform 12. The hinge axis, marked A, forms a longitudinal axis of the vehicle.

Moreover, at its end opposite the fixed platform 12, the mobile platform 10 is equipped with a nose 16, mobile and travelling with respect to said platform 12 around an axis A', which is perpendicular to the aforesaid axis A. there are also devices, not illustrated, which make it possible to move, on the one hand, the mobile platform with respect to the fixed platform and, on the other, the nose 16 with respect to the mobile platform 10.

Therefore, in view of the downwards pivoting of the mobile platform, it is possible to make use of gravity, or of a suitable motor. A cam or motor could be used, so as to bring the pivoting mobile platform back up. Finally, the nose 16 can be moved with respect to the mobile platform 10 by means of a cylinder, of a known variety.

Lastly, a sensor 18 is joined to the mobile platform 10, if necessary being fixed by any suitable means onto the lower surface of the latter. It could be an optical sensor, of the CCD variety, an ultrasound sensor, an inductive sensor or any other proximity detector of a known variety.

When in service, when the vehicle moves between two scheduled stops, the mobile platform 10 is in its position shown in figure 2A. This position is a raised one, since the angle formed between the two platforms 10 and 12 is small, for example in the region of 3%. Furthermore, the nose is retracted, so that the passengers can also stand on said mobile platform.

When the vehicle makes its stop, the door 8 is opened in a known manner. If it is not necessary to provide access for any person with reduced mobility, the mobile platform 10 is not moved. It can thus be used in the normal manner so that passengers can use it to move inside the vehicle.

On the other hand, if it is necessary to provide access for persons with reduced mobility, it is necessary to make the mobile platform 10 pivot downwards following the arrow f₁, until the beam 18' of the sensor 18 detects the proximity of the external platform 20. This intermediate position is illustrated in figure 2B.

The mobile platform 10 is thus secured and rotated with respect to the fixed platform 12. Then, the nose 16 is moved in a translatory movement according to arrow f₂, until it comes to bear against the external platform 20, as illustrated in figure 2C. In these conditions, persons with reduced mobility are then likely to move, from the external platform 20, along the mobile platform 10, in the direction of the fixed platform 12 on the chassis.

Once the station stop is finished, it is necessary to retract the nose 16, so that it no longer protrudes out over the mobile platform 10. Finally, the mobile platform 10 is once again pivoted upwards until it returns to its original position as in figure 2A.

In the example described above, the movement of the nose with respect to the mobile platform is operated after the mobile platform has pivoted around the fixed platform. However, as an alternative, the nose can be moved before the pivoting phase of the mobile platform, or at the same time as it.

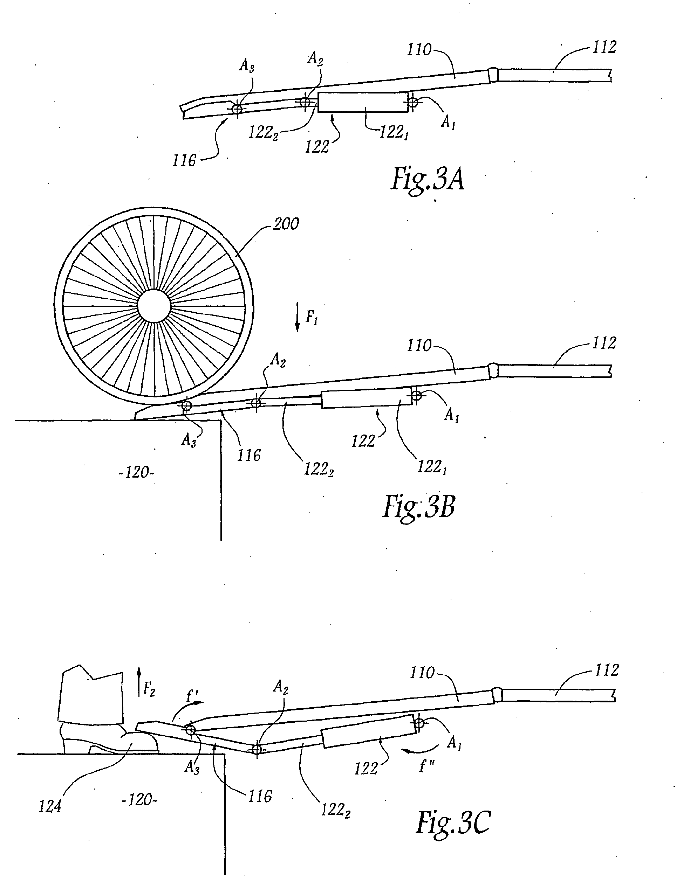

Figures 3A to 3C illustrate a further embodiment of the invention. In these drawings, the mechanical elements that are the same as in 2A to 2C are given the same reference numbers, increased by 100.

In this alternative embodiment, the nose 116 is put into motion by a cylinder 122, the body 122₁ of which is hinged with respect to the mobile platform 110, around an axis A₁. Said body 122₁ is joined to a cylinder rod 122₂, joined in a translatory movement to the nose 116 while also being hinged to it around a second axis marked A₂.

Lastly, the nose 116 is hinged, at the level of middle area, to the mobile platform 110, around a third axis, marked A₃. It should be noted that these three axes, A₁ to A₃, are approximately parallel to each other. Furthermore, the nose 116 is mounted on the lower surface of the mobile platform 110.

Figure 3A again illustrates the retracted position of the mobile platform 110, which corresponds to the layout of figure 2A. The setting in motion, on the one hand, of the mobile platform 110 with respect to the fixed platform 112 and, on the other, of the nose 116 with respect to the mobile platform 110, operates in a similar way to that described above with reference to the first embodiment. In particular, if it is necessary to move in a translatory movement the nose 116 with respect to the mobile platform 110, it is necessary to extend the cylinder rod 122₂ with respect to the body 122₁ of the cylinder.

Thus, as shown in figure 3B, when the nose 116 comes to bear against the external platform, persons with reduced mobility are likely to move along the mobile platform 110. In this respect, the wheel 200 of a wheelchair has been shown, allowing said persons to move.

Said wheel 200 then exerts a force, marked F₁, which is directed approximately downwards and does not therefore cause any rotation of the nose 116 with respect to the platform 110. In particular this is due to the fact that the nose 116 is arranged on the lower surface of said platform 110 so that it prevents the aforementioned rotation from taking place.

In contrast, figure 3C illustrates a situation whereby the nose 116 meets an obstacle as it is moving, in particular the foot of a passenger which is marked 124. The contact of the nose 116 with said foot 124 exerts a force, marked F₂, which is directed approximately upwards. This thus causes the nose 116 to rotate with respect to the mobile platform 110 around axis A₃, according to arrow f'. In these conditions, it is assumed that any major constraint at the level of the foot 124 is avoided, which is advantageous in terms of safety for the passengers.

The rotation of the nose is then accompanied by a movement of the cylinder 122. In this respect, a torsion spring, not illustrated, could be used, in proximity to the first hinge axis A₁. Said spring then helps to return the cylinder to its original position, according to arrow f".

The invention allows the previously mentioned objectives to be achieved.

Thus, the devices according to the invention, allowing access for persons with reduced mobility, are extremely reliable. Indeed, the invention makes use of a limited number of mechanical elements, which have a relatively simple structure.

Furthermore, it should be noted that the access devices according to the invention are able to adapt to all kinds of external platforms, in particular those of different heights. Indeed, depending on the height of the external platform in question, it is possible to adjust the distance across which the mobile platform pivots.

## Claims

1. Transport vehicle, in particular a bus, trolleybus or tram, having a chassis (2) resting on bearing members, such as wheels (6, 7), the chassis (2) having a fixed platform (12; 112) and at least one access device (10, 11; 110) which is mobile with respect to the fixed platform, the or each access device being movable between a retracted and an open position, in which it allows persons with reduced mobility to access the fixed platform from an external platform (20; 120), in particular those persons travelling in a wheelchair, said mobile access device being a mobile platform (10, 11; 110) which also allows passengers to alight or descend when in its retracted position, the or each mobile platform (10, 11; 110) comprising a retractable nose (16; 116), said retractable nose (16; 116) being able to be moved with respect to the mobile platform between a retracted and an extended position, in which it is able to come to bear on the external platform (20; 120); said transport vehicle being **characterized in that** said retractable nose (116) is placed in proximity to the lower surface of said mobile platform (10,11;110) and, in its extended position, said nose (116) is hinged with respect to said mobile platform (110) around a hinge axis (A₃), which specifically is parallel to a principal longitudinal axis of the vehicle; a cylinder (122) is adapted to move said hinged nose (116) with respect to the mobile platform (110).

2. Transport vehicle according to claim 1, **characterized in that** said nose (116) is hinged with respect to the cylinder rod (122₂) of said cylinder (122) around a further hinge axis (A₂), which specifically is parallel to a principal longitudinal axis of the vehicle.

## Patentansprüche

1. Transportfahrzeug, insbesondere ein Bus, ein Trolleybus oder eine Tram, mit einem Chassis (2), das auf Lagerelementen, wie etwa Rädern (6, 7), ruht, wobei das Chassis (2) eine feste Plattform (12; 112) und zumindest eine Zugangseinrichtung (10, 11; 110) aufweist, die mit Bezug auf die feste Plattform beweglich ist, wobei die oder jede Zugangseinrichtung bewegbar ist zwischen einer zurückgezogenen und einer offenen Stellung, in welcher sie zulässt, dass Personen mit Mobilitätseinschränkungen Zugang zu der festen Plattform von einer externen Plattform (20; 120) haben, insbesondere jene Personen, die in einem Rollstuhl fahren, wobei die mobile Zugangseinrichtung eine mobile Plattform (10, 11; 110) ist, die auch zulässt, dass Fahrgäste zusteigen oder aussteigen können, wenn sie sich in ihrer zurückgezogenen Stellung befindet, wobei die oder jede mobile Plattform (10, 11; 110) eine zurückziehbare Nase (16; 116) umfasst, wobei die zurückziehbare Nase (16; 116) mit Bezug auf die mobile Plattform bewegt werden kann zwischen einer zurückgezogenen und einer ausgefahrenen Stellung, in der sie zur Auflage auf der externen Plattform (20; 120) kommen kann; wobei das Transportfahrzeug **dadurch gekennzeichnet ist, dass** die zurückziehbare Nase (116) in der Nähe der unteren Oberfläche der mobilen Plattform (10, 11; 110) angeordnet ist, und die Nase (116) in ihrer ausgefahrenen Stellung mit Bezug auf die mobile Plattform (110) um eine Gelenkachse (A₃) angelenkt ist, die genauer parallel zu einer Hauptlängsachse des Fahrzeugs liegt; wobei ein Zylinder (122) ausgebildet ist, um die angelenkte Nase (116) mit Bezug auf die mobile Plattform (110) zu bewegen.

2. Transportfahrzeug nach Anspruch 1,
**dadurch gekennzeichnet, dass**
die Nase (116) mit Bezug auf die Zylinderstange (122) des Zylinders (122) um eine weitere Gelenkachse (A₂) angelenkt ist, die genauer parallel zu einer Hauptlängsachse des Fahrzeugs liegt.

## Revendications

1. Véhicule de transport, en particulier un bus, un trolleybus ou tram, ayant un châssis (2) reposant sur des éléments de support, comme des roues (6, 7), le châssis (2) ayant une plate-forme (12; 112) et au moins un dispositif d'accès (10, 11; 110) qui est mobile par rapport à la plate-forme fixe, le ou chaque dispositif d'accès étant déplaçable entre une position rétractée et une position ouverte, dans laquelle il permet à des personnes à mobilité réduite d'accéder à la plate-forme fixe depuis une plate-forme externe (20; 120), en particulier les personnes se déplaçant dans une chaise roulante, ledit dispositif d'accès mobile étant une plate-forme mobile (10, 11; 110) qui permet également à des passagers de débarquer ou de descendre lorsqu'elle se trouve dans sa position rétractée, la ou chaque plate-forme mobile (10, 11; 110) comprenant un ergot rétractable (16; 116), ledit ergot rétractable (16; 116) étant apte à être déplacé par rapport à la plate-forme mobile entre une position rétractée et une position étendue, dans laquelle elle est apte à porter sur la plate-forme externe (20; 120); ledit véhicule de transport étant **caractérisé en ce que** ledit ergot rétractable (16) est placé à proximité de la surface inférieure de ladite plate-forme mobile (10, 11; 110) et, dans sa position étendue, ledit ergot (116) est articulé par rapport à ladite plate-forme mobile (110) autour d'un axe d'articulation (A₃), qui est spécifiquement parallèle à un axe principal longitudinal du véhicule; un cylindre (122) est apte à déplacer ledit ergot articulé (116) par rapport à la plate-forme mobile (110).

2. Véhicule de transport selon la revendication 1, **caractérisé en ce que** ledit ergot (116) est articulé par rapport à la tige de cylindre (122₂) dudit cylindre (122) autour d'un autre axe d'articulation (A₂), qui est spécifiquement parallèle à l'axe principal longitudinal du véhicule.
